# EUROPEAN PATENT APPLICATION

(11) **EP 4 679 099 A1**
(43) Date of publication of application: **14.01.2026**
(21) Application number: 24766879.1
(22) Date of filing: 21.02.2024
(51) Int. Cl.: G01N 35/10, G01N 35/00

(54) **AUTOMATED ANALYSIS DEVICE**

(30) Priority: 06.03.2023 JP 2023033491
(71) Applicant: HITACHI HIGH-TECH CORPORATION, Tokyo 105-6409 (JP)
(72) Inventor: ISOBE, Natsumi, Tokyo 105-6409 (JP); YAMANO, Teruhiro, Tokyo 105-6409 (JP); SUZUKI, Naoto, Tokyo 105-6409 (JP)
(74) Representative: Strehl & Partner mbB
(86) International application number: PCT/JP2024/006221
(87) International publication number: WO 2024/185508

(57) **Abstract**

Provided is an automatic analyzer capable of continuing analysis while avoiding reagent contamination. The automatic analyzer includes a sample dispensing mechanism configured to aspirate a sample from a sample container and discharge the sample into a reaction container; a reagent dispensing mechanism configured to aspirate a reagent corresponding to an analysis item from a reagent container and discharge the reagent into the reaction container; and a control unit configured to control the sample dispensing mechanism and the reagent dispensing mechanism, and the control unit updates, for the sample in the sample container, an order of scheduled analysis items every time analysis in an item is performed.

## Description

### Technical Field

The present invention relates to an automatic analyzer.

### Background Art

In an automatic analyzer, different types of reagents are dispensed into a reaction container and mixed with a reagent (specimen) according to an analysis item, but when so-called reagent contamination occurs, accuracy of an analysis result may be reduced. For this reason, a dispensing mechanism contaminated with the reagent is subjected to cleaning using water, or cleaning using a detergent when only cleaning using water is insufficient. In particular, an increase in the number of times of the cleaning using the detergent leads to an increase in a consumption amount of the detergent and a decrease in an overall analysis processing capacity. Therefore, PTL 1 discloses a technique in which, when there is a combination that causes the reagent contamination in an order of analysis items for one specimen, the order is changed so as to avoid the occurrence of the reagent contamination (paragraphs 0072 to 0085).

### Citation List

### Patent Literature

PTL 1: JP2010-60550A

### Summary of Invention

### Technical Problem

However, in the technique disclosed in PTL 1, the order change for avoiding the occurrence of the reagent contamination is performed only once. Therefore, when a status of the reagent corresponding to any analysis item or the like changes after the order of the analysis items is changed, if analysis is continued in the same order, a problem may occur.

An object of the invention is to provide an automatic analyzer capable of continuing analysis while avoiding reagent contamination.

### Solution to Problem

In order to solve the above-mentioned problems, the invention provides an automatic analyzer including: a sample dispensing mechanism configured to aspirate a sample from a sample container and discharge the sample into a reaction container; a reagent dispensing mechanism configured to aspirate a reagent corresponding to an analysis item from a reagent container and discharge the reagent into the reaction container; and a control unit configured to control the sample dispensing mechanism and the reagent dispensing mechanism, in which the control unit updates, for the same sample in the sample container, an order of scheduled analysis items every time analysis in an item is performed.

### Advantageous Effects of Invention

According to the invention, it is possible to provide an automatic analyzer capable of continuing analysis while avoiding reagent contamination.

### Brief Description of Drawings

[FIG. 1] FIG. 1 is a diagram illustrating an overall configuration of an automatic analyzer.
[FIG. 2] FIG. 2 is a diagram schematically illustrating a structure of software in a control unit of the automatic analyzer.
[FIG. 3] FIG. 3 is a diagram illustrating timings of a planning process and an analysis operation.
[FIG. 4] FIG. 4 is a flowchart illustrating a procedure of a static planning process.
[FIG. 5] FIG. 5 is a diagram illustrating an example of analysis request information.
[FIG. 6] FIG. 6 is a flowchart illustrating a procedure of a dynamic planning process according to Embodiment 1.
[FIG. 7] FIG. 7 is a diagram illustrating an example of a screen displayed on a display unit when an order of analysis items is updated.
[FIG. 8] FIG. 8 is a flowchart illustrating a procedure of a dynamic planning process according to Embodiment 2.
[FIG. 9] FIG. 9 is an example of a screen displayed on the display unit when a user sets a range of the dynamic planning process.

### Description of Embodiments

An embodiment of the invention will be described in detail with reference to the drawings. In the following embodiment, it is needless to mention that components (also including element steps and the like) thereof are not necessarily essential unless otherwise specified or unless clearly considered to be essential in principle.

In the drawings used in the present description, the same or corresponding components are denoted by the same or similar reference signs, and repeated description of these components may be omitted.

### Embodiment 1

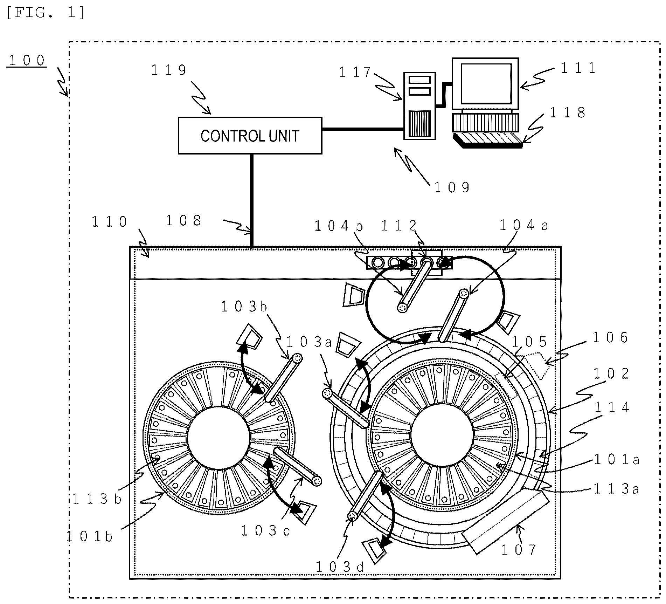

An automatic analyzer according to Embodiment 1 will be described with reference to FIGS. 1 to 7.

First, an overall configuration of the automatic analyzer will be described with reference to FIG. 1. FIG. 1 is a diagram illustrating the overall configuration of the automatic analyzer. As illustrated in FIG. 1, the automatic analyzer 100 includes a plurality of reagent disks 101a, 101b, a reaction disk 102, a plurality of reagent dispensing probes 103a, 103b, 103c, 103d (reagent dispensing mechanisms), sample dispensing probes 104a, 104b (sample dispensing mechanisms), a sample transport mechanism 110, a measurement unit (a light source 105 and a multi-wavelength photometer 106), a reaction container cleaning mechanism 107, a control unit 119, an operation unit 117, a display unit 111, and an input unit 118.

The reagent disks 101a, 101b can hold a plurality of reagent containers 113a, 113b in a circumferential manner, and also have a role as a cooler for keeping reagents in the reagent containers 113a, 113b cool at a constant temperature. The reagent disks 101a, 101b rotate to move the reagent containers 113a, 113b to predetermined positions on a circumference. In the reagent containers 113a, 113b, a reagent used for analysis and a detergent used for cleaning each mechanism in the automatic analyzer 100 are sealed. In the automatic analyzer 100 of the present embodiment, the plurality of reagent disks 101a, 101b operate in parallel. The reagent disks 101a, 101b include automatic loaders (not illustrated) capable of automatically taking the reagent containers 113a, 113b into or out of the reagent disks 101a, 101b, respectively. The number of reagent disks is not limited to two, the automatic loaders are not essential, and a reagent disk of a type in which a user directly takes in and out a reagent container may be used.

A plurality of reaction containers 114 for reacting the sample and the reagent are mounted on the reaction disk 102 in the circumferential manner, and the reaction container 114 is moved to a predetermined position on the circumference by rotating the reaction disk 102.

The reagent dispensing probes 103a, 103d are rotatable and vertically movable, and aspirate a predetermined amount of the reagent from the reagent container 113a on the reagent disk 101a and discharge the reagent to the reaction container 114. On the other hand, the reagent dispensing probes 103b, 103c are rotatable and vertically movable, and aspirate a predetermined amount of the reagent from the reagent container 113b on the reagent disk 101b and discharge the reagent to the reaction container 114.

The sample dispensing probes 104a, 104b are rotatable and vertically movable, and aspirate a predetermined amount of the sample from the sample container 112 transported by the sample transport mechanism 110 and discharge the sample into the reaction container 114.

Around the reaction disk 102, the measurement unit (the light source 105 and the multi-wavelength photometer 106) and the reaction container cleaning mechanism 107 are provided to measure an absorbance of a mixture of the sample and the reagent in the reaction container 114 and clean the reaction container 114 used for the measurement, respectively.

When sample information associated with the sample container 112 and analysis request information input by the input unit 118 or the like are received from the operation unit 117, the control unit 119 determines an order of analysis and controls mechanisms such as the reagent dispensing probes and the sample dispensing probes. Further, the control unit 119 calculates a concentration of a specific component and the like based on the information measured by the measurement unit, and transmits a calculated result to the operation unit 117. The operation unit 117 performs an arithmetic process based on the received calculation result to output a result as an analysis result, and displays a screen indicating the analysis result on the display unit 111.

The processing performed by the control unit 119 and the operation unit 117 may be implemented by a processor such as a central processing unit (CPU) executing each program stored in a storage unit such as a memory on a general-purpose computer, or may be implemented by hardware such as a dedicated circuit board. The operation unit 117 and the control unit 119 are connected to the mechanisms in the automatic analyzer 100 via wired or wireless network lines 108, 109.

The display unit 111 displays various screens such as a screen for ordering analysis items for each sample and a screen for confirming measurement results, and is a liquid crystal display in the present embodiment. The display unit 111 does not need to be the liquid crystal display, and may be a printer, a combination of the liquid crystal display and the printer, or a touch panel display that also serves as the input unit 118 to be described below.

The input unit 118 is used by the user to set various parameters, input the analysis request information, input an instruction to start or stop analysis, and the like based on the screen displayed on the display unit 111, and is a keyboard, a mouse, or the like.

The automatic analyzer 100 of the present embodiment is implemented by one analysis unit, but may be implemented by two or more analysis units. In addition, the automatic analyzer 100 may include a unit that executes a pre-process or post-treatment on the sample. The sample transport mechanism 110 is not essential, and the user may directly take in and out the sample container.

Next, an outline of operations of the automatic analyzer 100 will be described.

First, the control unit 119 operates the sample dispensing probes 104a, 104b so as to aspirate the sample from the sample container 112 transported by the sample transport mechanism 110 according to a measurement item designated by the operation unit 117. Thereafter, the sample dispensing probes 104a, 104b discharge the aspirated sample to the reaction container 114 on the reaction disk 102. Further, the reagent dispensing probes 103a, 103b, 103c, 103d aspirate the reagent from the reagent containers 113a, 113 on the reagent disks 101a, 101b, and discharge the aspirated reagent into the reaction container 114.

The sample and the reagent discharged into the reaction container 114 are stirred, and light is emitted from the light source 105 to the mixed liquid after stirring. The multi-wavelength photometer 106 measures a luminous intensity of the light passing through the mixed liquid in the reaction container 114, and transmits the measurement result to the control unit 119. The control unit 119 calculates a concentration of a specific component in the sample using measurement information acquired by the measurement unit (the light source 105 and the multi-wavelength photometer 106). The calculation result is notified to the user via the display unit 111 as the analysis result, and is stored in the storage unit (not illustrated) in the operation unit 117.

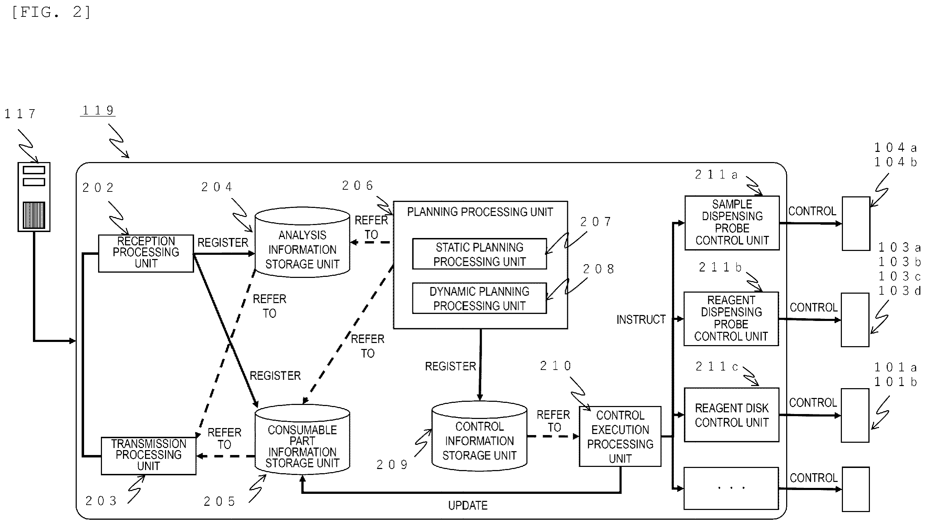

Next, specific control contents in the control unit 119 of the automatic analyzer 100 will be described. FIG. 2 is a diagram schematically illustrating a structure of software in the control unit of the automatic analyzer.

As illustrated in FIG. 2, the control unit 119 includes, as functions for implementing control related to analysis, a reception processing unit 202, a transmission processing unit 203, an analysis information storage unit 204, a consumable part information storage unit 205, a planning processing unit 206, a control information storage unit 209, a control execution processing unit 210, and control units for respective mechanisms. The control units for respective mechanisms are, for example, a sample dispensing probe control unit 211a, a reagent dispensing probe control unit 211b, and a reagent disk control unit 211c.

The analysis information storage unit 204 stores the analysis request information received via the reception processing unit 202. The analysis request information is information necessary for performing an analysis operation, and may be information input or set by the input unit 118, or may be information set by another computer communicatively connected to the operation unit 117.

The consumable part information storage unit 205 stores information related to availability of consumable parts (remaining amount and expiration date of the reagent, guaranteed range of quality control sample, and the like). Here, the information stored in the consumable part information storage unit 205 is registered or updated by the reception processing unit 202 or the control execution processing unit 210, and is transmitted to the operation unit 117 via the transmission processing unit 203 as necessary.

The planning processing unit 206 includes a static planning processing unit 207 and a dynamic planning processing unit 208, refers to information stored in the analysis information storage unit 204 and the consumable part information storage unit 205, executes a static planning process or a dynamic planning process at a timing to be described later, and plans the analysis operation. The static planning process is a process of determining an order of the analysis items based on the analysis request information associated with the sample, and is performed once for each sample. On the other hand, the dynamic planning process is a process of reviewing the order of the analysis items determined in the static planning process based on a status of the consumable parts, specifically, dispensing permission information of the reagent, and updating the order as necessary, and is performed every time the analysis of each item is performed (before dispensing the sample and the reagent necessary for each analysis item). A result of the process in the planning processing unit 206 is stored in the control information storage unit 209 as control information for controlling each mechanism.

The control execution processing unit 210 refers to the control information stored in the control information storage unit 209, and outputs an instruction (control command) to each mechanism via the sample dispensing probe control unit 211a, the reagent dispensing probe control unit 211b, the reagent disk control unit 211c, and the like. Then, according to respective instructions, the sample dispensing probe control unit 211a operates the sample dispensing probes 104a, 104b, the reagent dispensing probe control unit 211b operates the reagent dispensing probes 103a, 103b, 103c, 103d, and the reagent disk control unit 211c operates the reagent disks 101a, 101b.

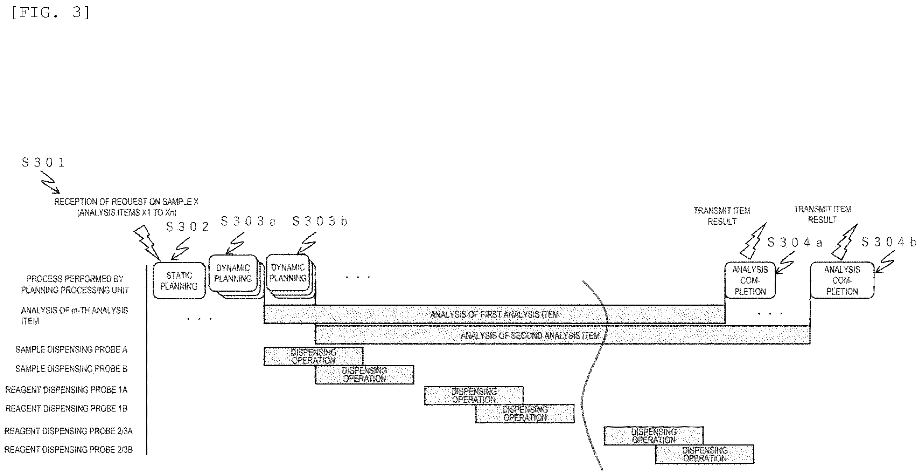

FIG. 3 is a diagram illustrating timings of the planning processes and the analysis operations. First, the reception processing unit 202 receives analysis request information of a sample X from the operation unit 117 (step S301), and the analysis request information is stored (registered) in the analysis information storage unit 204. The analysis request information includes information on analysis items X1 to Xn set for the sample X.

Next, the static planning processing unit 207 determines an order of the analysis items X1 to Xn of the sample X (step S302), and stores (registers) the order in the control information storage unit 209.

Thereafter, the dynamic planning processing unit 208 reviews the order of the analysis items before dispensing the sample and the reagent necessary for a first analysis item, and updates the order of the analysis items as necessary (step S303a). When the order of the analysis items is determined, the control execution processing unit 210 operates the sample dispensing probe, the reagent dispensing probe, and the like according to the order stored in the control information storage unit 209, and performs analysis regarding the first analysis item. When the analysis of the first analysis item is completed, the transmission processing unit 203 transmits an analysis result (measurement information) thereof to the operation unit 117 (step S304a).

Next, the dynamic planning processing unit 208 reviews the order of the analysis items before dispensing the sample and the reagent necessary for a second analysis item, and updates the order of the analysis items as necessary (step S303b). When the order of the analysis items is determined, the control execution processing unit 210 operates the sample dispensing probe, the reagent dispensing probe, and the like according to the order stored in the control information storage unit 209, and performs analysis regarding the second analysis item. When the analysis of the second analysis item is completed, the transmission processing unit 203 transmits an analysis result (measurement information) thereof to the operation unit 117 (step S304b).

Thereafter, the same processing is repeated until the transmission of the analysis results of all the analysis items is completed.

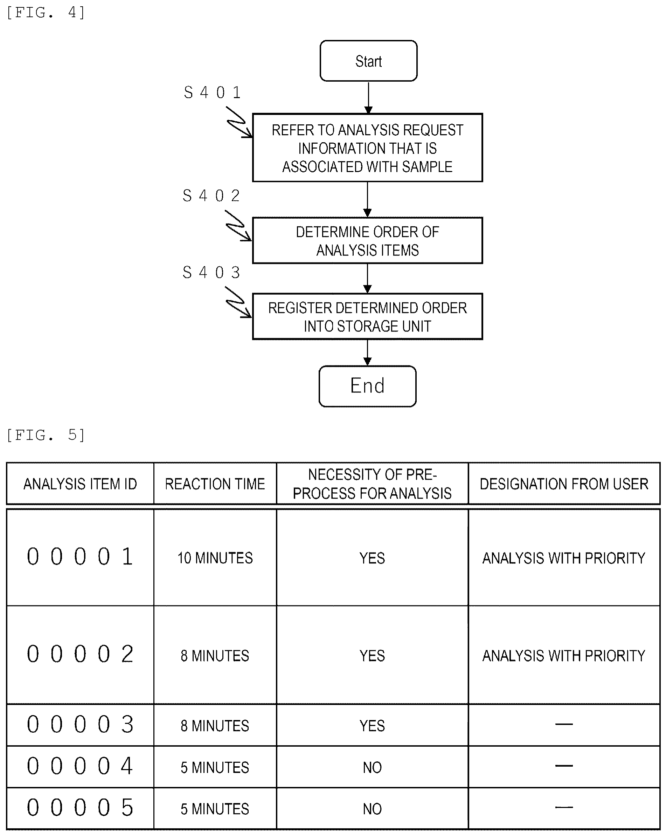

Details of the static planning process will be described. FIG. 4 is a flowchart illustrating a procedure of the static planning process.

First, the static planning processing unit 207 refers to the analysis request information stored in the analysis information storage unit 204 (step S401).

FIG. 5 is a diagram illustrating an example of the analysis request information. As illustrated in FIG. 5, the analysis request information stores, for each analysis item ID, information on, for example, a reaction time, necessity of pre-process for analysis, and designation of priority or the like by a user. The information on the reaction time, the necessity of the pre-process for analysis, and the like may be collectively set in advance via the operation unit 117 separately from the analysis request information.

Next, the static planning processing unit 207 determines an order of scheduled analysis items based on the analysis request information (step S402). As a method for determining the order, for example, a method of advancing an order of an analysis item having a long reaction time or an analysis item requiring the pre-process in order to align times when the analysis results of the analysis items are obtained is exemplified. In addition, when the user designates an item to be preferentially analyzed, there is a method for advancing the order of the analysis item. As described above, in the static planning process, information that does not change over time is mainly used.

When the order of the scheduled analysis item is determined, the static planning processing unit 207 stores (registers) the order in the control information storage unit 209 (step S403), and ends the static planning process.

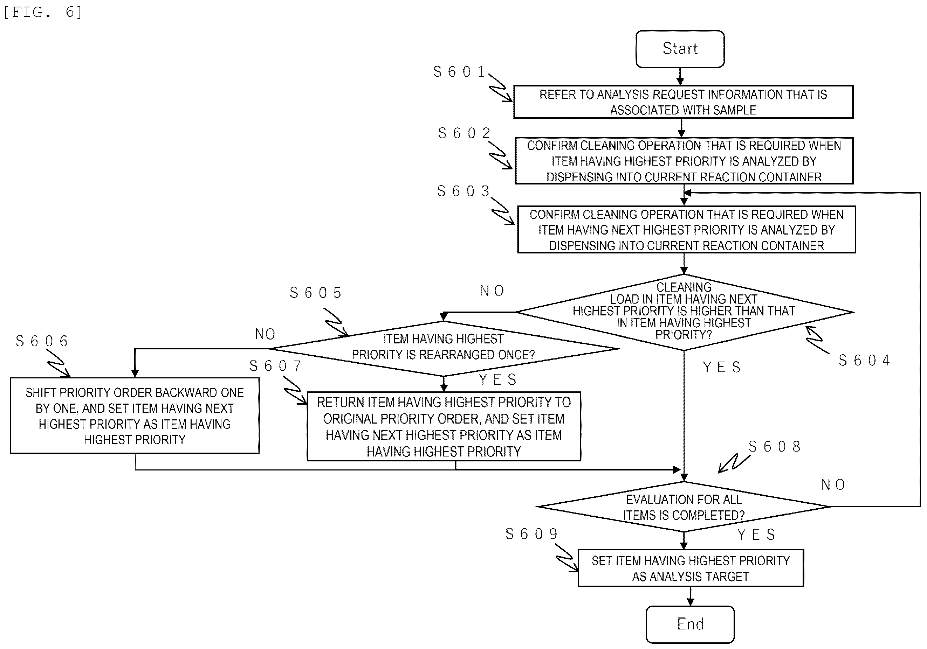

Details of the dynamic planning process will be described. FIG. 6 is a flowchart illustrating a procedure of the dynamic planning process according to Embodiment 1.

First, the dynamic planning processing unit 208 refers to the analysis request information stored in the analysis information storage unit 204 (step S601).

Next, the dynamic planning processing unit 208 confirms a cleaning operation required for the reagent dispensing probe when an item having a highest priority of the order determined by the static planning process is assigned as a current analysis item (step S602). When there are a plurality of systems for dispensing the reagent as in the present embodiment, an item having the highest priority is assigned from items (reagent that can be dispensed) that can be analyzed in the system used at a current dispensing timing. In the confirmation of the cleaning operation, a cleaning load determined by a time required for the cleaning operation for reducing reagent contamination, a detergent consumption amount, and the like is confirmed. Note that, the cleaning load varies depending on a combination of preceding and following analysis items, and for example, cleaning with only water is performed when the cleaning load is low, and special cleaning also using the detergent is performed when the cleaning load is high.

Further, the dynamic planning processing unit 208 confirms a cleaning operation required for the reagent dispensing probe when an item having a next highest priority of the order determined by the static planning process is assigned as the current analysis item (step S603).

Thereafter, the dynamic planning processing unit 208 compares the cleaning load corresponding to the item having the highest priority confirmed in step S602 with the cleaning load corresponding to the item having the next highest priority confirmed in step S603 (step S604). When the cleaning load of the item having the next highest priority is higher than that of the item having the highest priority, the process proceeds to step S608 to be described later without rearranging the order.

On the other hand, when the cleaning load of the item having the highest priority is higher than that of the item having the next highest priority in step S604, the dynamic planning processing unit 208 determines whether the order of the item having the highest priority is rearranged in the past (step S605). When the order of the item having the highest priority is not rearranged in the past, the dynamic planning processing unit 208 shifts a priority order backward one by one, sets the item having the next highest priority as the item having the highest priority (step S606), and proceeds to step S608 to be described later.

In step S605, when the order of the item having the next highest priority is rearranged in the past, the dynamic planning processing unit 208 returns the item having the highest priority to an original priority order, sets the item having the next highest priority as the item having the highest priority (step S607), and proceeds to step S608 to be described later.

In step S608, the dynamic planning processing unit 208 determines whether the confirmation and comparison of the cleaning load are completed for all the analysis items. If not completed, the process returns to step S603 described above, and the same processing is repeated until completed.

On the other hand, when the completion is determined in step S608, the dynamic planning processing unit 208 finally registers (updates) the item having the highest priority at that time as the current analysis item (step S609).

As described above, in the dynamic planning process of the present embodiment, since the order is reviewed in consideration of not only the cleaning load of the analysis item set as the item having the highest priority by the static planning process but also the cleaning loads of other analysis items, the reagent contamination and the detergent consumption amount can be further reduced. In addition, in the dynamic planning process of the present embodiment, every time the same sample in the sample container is analyzed for each item, the order of the scheduled analysis item is reviewed with reference to the information stored in the consumable part information storage unit 205, and the order is updated as necessary. Therefore, even when a dispensing permission status of the reagent changes over time, the analysis can be continued. In particular, when there are a plurality of reagent disks or when the reagent disk has an autoloader function, the reagent that can be dispensed changes in real time or the reagent container is taken in or out in the middle of a series of analysis operations, and thus it is difficult to accurately predict at a stage of the static planning process. Therefore, in such a case, it is extremely effective not only to perform the static planning process once for each sample but also to perform the dynamic planning process each time dispensing is performed.

Here, when the number of analysis items whose order is to be reviewed is large, a large load is imposed on the arithmetic operation in the dynamic planning processing unit 208. Therefore, in the present embodiment, the dynamic planning process for updating the order of the analysis items is executed a plurality of times in a divided manner. For example, when there are ten analysis items scheduled for analysis and a range of the order of the analysis items to be rearranged is up to 10 analysis items in the future, that is, when the reagent contamination is to be evaluated for up to 10 items in the future, the dynamic planning process is divided and executed 10 times. The ten times of the process are performed before a start of dispensing for the current analysis item.

Then, the dispensing is started with the item having the highest priority finally determined by the ten times of the process as the current analysis item.

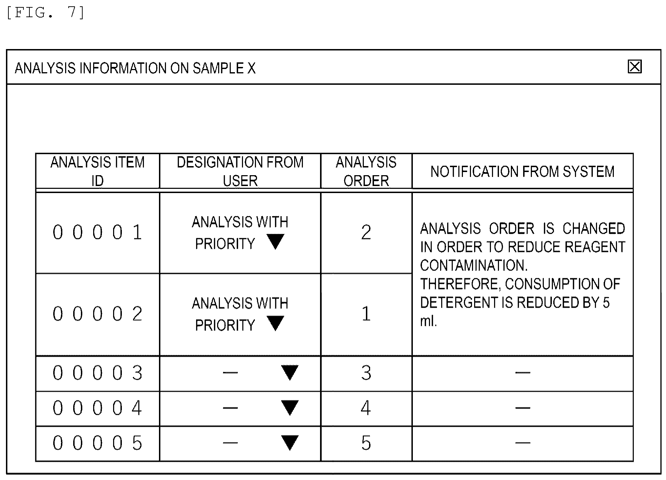

In addition, when the order of the analysis items is different from an initial order by the dynamic planning process, the control unit 119 may cause the display unit 111 to output a screen as illustrated in FIG. 7 via the operation unit 117 to notify the user. The initial order is the order of the analysis item IDs included in the analysis request information, the order designated in advance by the user, or the like.

FIG. 7 is a diagram illustrating an example of a screen displayed on the display unit when the order of the analysis items is updated. As illustrated in FIG. 7, it is desirable to display not only the updated analysis order but also priority information designated in advance by the user and a reason why the order is changed. This enables a user or a service person to efficiently operate the analyzer.

### Embodiment 2

A target of rearrangement of the order in the dynamic planning process in Embodiment 1 is all the analysis items included in the analysis request information for each sample, which is extremely effective for reducing the reagent contamination. However, the method of Embodiment 1 cannot cope with a case where it takes time for the arithmetic operation of the dynamic planning process, a case where there is an analysis item for which the rearrangement by the static planning process is desired to be prioritized, or the like.

Therefore, in Embodiment 2, it is possible to set or input in advance whether to permit the dynamic planning process itself or a range in which the dynamic planning process is permitted (a condition of an analysis item for which the rearrangement of the order is permitted).

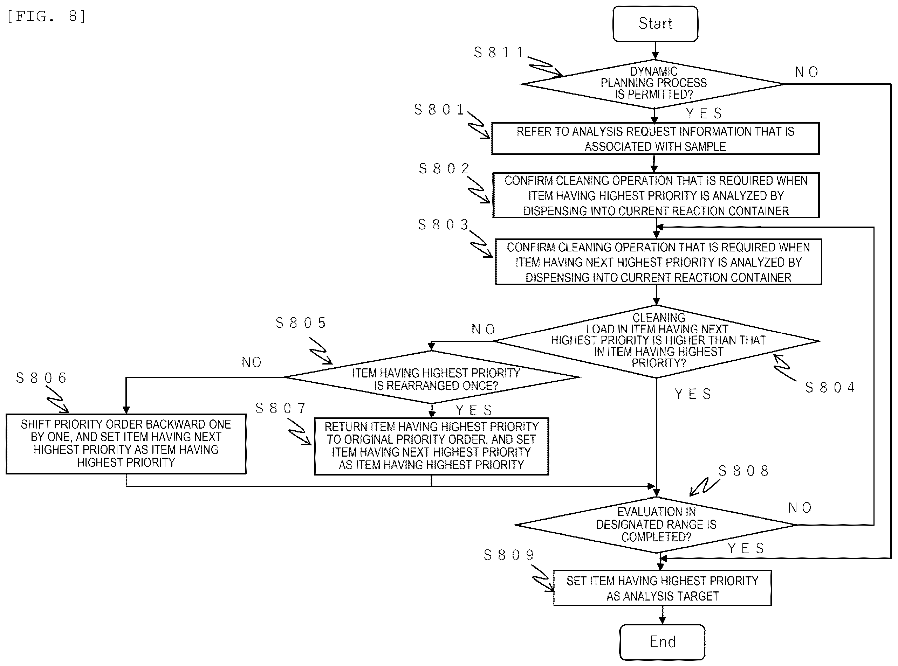

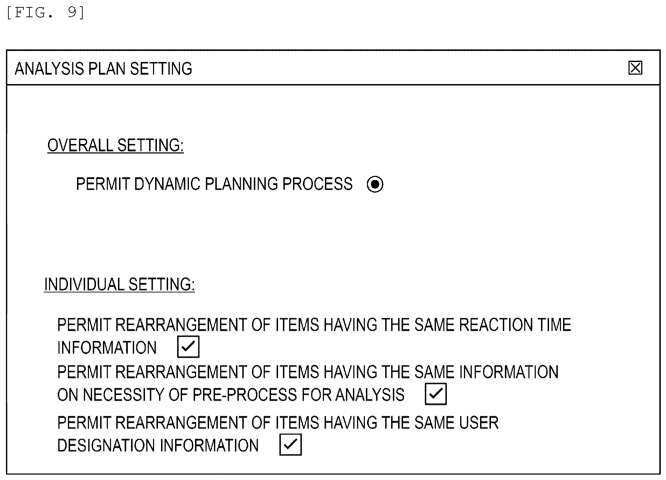

Hereinafter, an automatic analyzer according to Embodiment 2 will be specifically described with reference to FIGS. 8 and 9. FIG. 8 is a flowchart illustrating a procedure of the dynamic planning process according to Embodiment 2.

In Embodiment 2, first, the dynamic planning processing unit 208 determines whether the dynamic planning process is permitted (step S811). When the dynamic planning process is not permitted, the process proceeds to step S809, and the item having the highest priority determined by the static planning process is assigned as the current analysis target.

On the other hand, when it is determined in step S811 that the dynamic planning process is permitted, the dynamic planning processing unit 208 executes steps 801 to S807. Steps S801 to S807 of Embodiment 2 are the same as steps S601 to S607 of Embodiment 1. Thereafter, in Embodiment 2, in step S808, the dynamic planning processing unit 208 determines whether the confirmation and comparison of the cleaning load are completed for all the analysis items in the designated range.

Here, the range in which the dynamic planning process is permitted can be designated by the user via the input unit 118. FIG. 9 is an example of a screen displayed on the display unit when the user sets the range of the dynamic planning process. As illustrated in FIG. 9, the screen displayed on the display unit 111 includes a plurality of check boxes for individual settings in addition to a check box for setting permission/non-permission of the dynamic planning process itself as the overall setting. The individual settings include a check box for permitting rearrangement only for analysis items having the same reaction time, a check box for permitting rearrangement only for analysis items having the same presence or absence of the pre-process, and a check box for permitting rearrangement only for analysis items designated by the user.

In addition, the range in which the dynamic planning process is permitted may be designated according to a processing capacity of the CPU of the control unit 119 or an assumed arithmetic load. For example, by setting the number of analysis items to be confirmed and compared for the cleaning load within a predetermined number, it is possible to reduce the arithmetic load in the dynamic planning process.

When the completion is not determined in step S808, the process returns to step S803, and steps S803 to S808 are repeated until the process is completed. When the completion is determined in step S808, the dynamic planning processing unit 208 finally registers (updates) the item having the highest priority at that time as the current analysis item (step S809).

As described above, the automatic analyzer of the present embodiment outputs a screen for selecting a setting of permitting the rearrangement of the order of the analysis items and a setting of not permitting the rearrangement of the order of the analysis items, and thus can cope with a user who does not desire to use the dynamic planning process. In addition, even when the rearrangement of the order of the analysis items is permitted, the user can input conditions for the analysis items for which the rearrangement is permitted, thereby allowing specific requests of the user to be reflected in the dynamic planning process.

### Reference Signs List

100: automatic analyzer
101a, 101b: reagent disk
102: reaction disk
103a, 103b, 103c, 103d: reagent dispensing probe
104a, 104b: sample dispensing probe
105: light source
106: multi-wavelength photometer
107: reaction container cleaning mechanism
108, 109: network line
110: sample transport mechanism
111: display unit
112: sample container
113a, 113b: reagent container
114: reaction container
117: operation unit
118: input unit
119: control unit

## Claims

1. An automatic analyzer, comprising:
a sample dispensing mechanism configured to aspirate a sample from a sample container and discharge the sample into a reaction container;
a reagent dispensing mechanism configured to aspirate a reagent corresponding to an analysis item from a reagent container and discharge the reagent into the reaction container; and
a control unit configured to control the sample dispensing mechanism and the reagent dispensing mechanism, wherein
the control unit updates, for the same sample in the sample container, an order of scheduled analysis items every time analysis in an item is performed.

2. The automatic analyzer according to claim 1, wherein
after determining the order of the analysis items based on analysis request information associated with the sample, the control unit updates the order of the analysis items based on dispensing permission information of a target reagent before dispensing the sample and the reagent which are necessary for each of the analysis items.

3. The automatic analyzer according to claim 2, further comprising:
a reagent disk configured to hold the reagent container, wherein
the automatic analyzer includes a plurality of the reagent disks, or has an autoloader function of automatically taking the reagent container into or out of the reagent disk.

4. The automatic analyzer according to claim 2, wherein
the control unit determines or updates the order of the analysis items based on a cleaning load determined according to a combination of preceding and following analysis items.

5. The automatic analyzer according to claim 2, wherein
the control unit executes an arithmetic operation for updating the order of the analysis items, a plurality of times in a divided manner.

6. The automatic analyzer according to claim 2, wherein
when rearranging the order of the analysis items, the control unit outputs a notification for notifying the rearranging.

7. The automatic analyzer according to claim 2, wherein
the analysis items to be subjected to order rearrangement are the same in a reaction time or in whether there is a pre-process.

8. The automatic analyzer according to claim 2, wherein
a screen for inputting a condition related to the analysis items whose order rearrangement is permitted is output.

9. The automatic analyzer according to claim 2, wherein
the control unit outputs a screen for selecting a setting of permitting order rearrangement of the analysis items and a setting of not permitting the order rearrangement of the analysis items.
